Europäisches Patentamt

European Patent Office

Office européen des brevets

(11) Veröffentlichungsnummer: **0 441 465 A2**

## (12) EUROPÄISCHE PATENTANMELDUNG

(21) Anmeldenummer: **91250028.7**

(22) Anmeldetag: **04.02.91**

(51) Int. Cl.5: **B32B 29/04**

(30) Priorität: **05.02.90 DE 4003703**

(43) Veröffentlichungstag der Anmeldung:
**14.08.91 Patentblatt 91/33**

(84) Benannte Vertragsstaaten:
**AT BE CH DE FR GB LI LU NL**

(71) Anmelder: **Kühn, Klaus**
**Warmensteinacher Strasse 50**
**W-1000 Berlin 47(DE)**

(72) Erfinder: **Kühn, Klaus**
**Warmensteinacher Strasse 50**
**W-1000 Berlin 47(DE)**

(74) Vertreter: **Maikowski, Michael, Dipl.-Ing. Dr. et al**
**Patentanwälte Maikowski & Ninnemann**
**Xantener Strasse 10**
**W-1000 Berlin 15(DE)**

(54) **Mehrschichtiges Verbundmaterial.**

(57) Die Erfindung betrifft ein mehrschichtiges Verbundmaterial, einen aus diesem hergestellten Zuschnitt für eine Polstertasche und die Verwendung des Materials zur Herstellung von Polstertaschen und gefütterten Briefkuverts. Das mehrschichtige Verbundmaterial weist zwei Papierlagen 1 und 2 auf, die im Bereich ihrer Ränder 3 bis 6 miteinander verbunden sind. Zwischen diesen beiden Papierlagen 1 und 2 ist eine Polster- oder Futtermateriallage 9 aus Holzwolle und/oder Stroh und/oder Heu und/oder Fasern aus leicht verrott- oder vermoderbaren Faserpflanzen angeordnet.

# Fig.1

EP 0 441 465 A2

# MEHRSCHICHTIGES VERBUNDMATERIAL

Die Erfindung betrifft ein mehrschichtiges Verbundmaterial.

Es ist bekannt, aus einer Papierlage und einer oder mehreren PE-Folie (n) ein mehrschichtiges Verbundmaterial herzustellen, das beispielsweise zu gefütterten Briefkuverts oder Polstertaschen verarbeitet wird. Derartige Polstertaschen werden zum Postversand empfindlicher Gegenstände oder Materialien verwendet. Obwohl unter Verwendung von PE-Folie (n) hergestellte Polstertaschen den an sie gestellten Anforderungen genügen, belasten sie nach dem Gebrauch die Umwelt.

Der Erfindung liegt die Aufgabe zugrunde, ein mehrschichtiges Verbundmaterial für Polster oder Futterzwecke unter Verwendung von Papier zu schaffen, welches nach dem Gebrauch ohne Umweltbelastung beseitigt werden kann.

Erfindungsgemäß wird diese Aufgabe durch den Gegenstand des Patentanspruchs 1 gelöst.

Das erfindungsgemäße mehrschichtige Verbundmaterial weist zwei Papierlagen auf, die zumindest im Bereich zweier einander gegenüberliegender Ränder miteinander verbunden sind. Zwischen diesen Papierlagen ist eine Polster- oder Futtermateriallage angeordnet, die aus Holzwolle oder Stroh und/oder Heu und/oder aus Fasern aus leicht verrott- oder vermoderbaren Faserpflanzen besteht. Diese Materialien können jeweils für sich oder im Gemisch miteinander verwendet werden. Sowohl Holzwolle als auch Stroh und Heu bilden einen Werkstoff, der in vielen Gebieten zur Verfügung steht und ohne Umweltbelastung gewonnen werden kann. Holzwolle, Stroh und Heu sind leicht verrott- oder vermoderbare Materialien, so daß deren Beseitigung nach der Verwendung keine Umweltprobleme mit sich bringt.

Mit besonderem Vorteil können für sich oder im Gemisch mit den vorbezeichneten Materialien auch Fasern aus leicht verrott- oder vermoderbaren Faserpflanzen als Polster- oder Futtermateriallage in diesem mehrschichtigen Verbundmaterial angeordnet werden. Bei diesen Fasern handelt es sich um Produkte der Agrartechnik, die weltweit zur Verfügung stehen und ohne Umweltbelastung gewonnen und nach Gebrauch vernichtet werden können.

Mit besonderem Vorteil können die Fasern Bastfasern sein, bevorzugt sind Flachs- und/oder Hanf- und/oder Jutefasern.

Es besteht aber auch die Möglichkeit, daß die Fasern Hartfasern sind und mit besonderem Vorteil Kokos- und/oder Manilahanf- und/oder Sisalfasern.

Es ist von Vorteil, die Polster- oder Futtermateriallage an mindestens einer Papierlage zu befestigen, insbesondere anzuheften. Die Polster- oder Futtermateriallage wird mit Vorteil an mindestens einer Papierlage mittels Leim angeheftet. Dazu können Leimtupfer verwendet werden.

Eine besonders einfache Herstellung dieses mehrschichtigen Verbundmaterial wird dadurch ermöglicht, daß die Papierlage durch Prägen oder Verkleben miteinander verbunden sind. Zum Verkleben kann das bekannte Verleimen verwendet werden oder die Papierlagen können im Bereich der Ränder kaschiert und im Lauf der Fertigung durch Wärme und Druck miteinander verbunden werden.

Für besondere Verwendungszwecke ist es vorteilhaft, das Polster- oder Futtermaterial zu sterilisieren.

Bei der Herstellung wird eine Unterbahn von einer Papierrolle zugeführt. Auf dieser Unterbahn wird kontinuierlich oder chargenweise eine leicht verrott- oder vermoderbare Lage aus den vorbezeichneten Agrarprodukten aufgebracht. Die Unterbahn kann mit Leimtupfen versehen sein und an den Rändern Verleimungsstellen aufweisen. Die Oberbahn wird zugeführt und mit der Unterbahn verbunden. Danach können weitere Bearbeitungsschritte, falls erforderlich, durchgeführt werden. Beispielsweise können zwischen den aufgebrachten Chargen Querverschlüsse hergestellt werden.

Insbesondere ist es vorteilhaft, einen Zuschnitt für eine Polstertasche aus einem mehrschichtigen Verbundmaterial der vorbeschriebenen Art so zu gestalten, daß an den längeren Seiten eines rechteckigen, allseitig geschlossenen Verbundmaterialabschnittes, einander gegenüberliegend, eine Bodenklappe und eine Verschlußklappe lediglich aus den Papierlagen ausgebildet sind.

Ein derartiger Zuschnitt kann dann in an sich bekannter Weise zu einer Polstertasche geformt werden.

Es liegt im Rahmen der Erfindung, auch anders gestaltete Taschen und Briefkuverts aus diesem Material herzustellen.

Ausführungsbeispiele der Erfindung sollen in der folgenden Beschreibung unter Bezugnahme auf die Figuren der Zeichnung erläutert werden.

Es zeigen:

Fig. 1    eine schematische Querschnittsansicht eines erfindungsgemäßen mehrschichtigen Verbundmaterials,

Fig. 2    eine schematiche Draufsicht auf einen Polstertaschenzuschnitt und

Fig. 3    eine schematische Ansicht einer Polstertasche, die beispielsweise aus dem in Fig. 2 dargestellten Zuschnitt hergestellt ist.

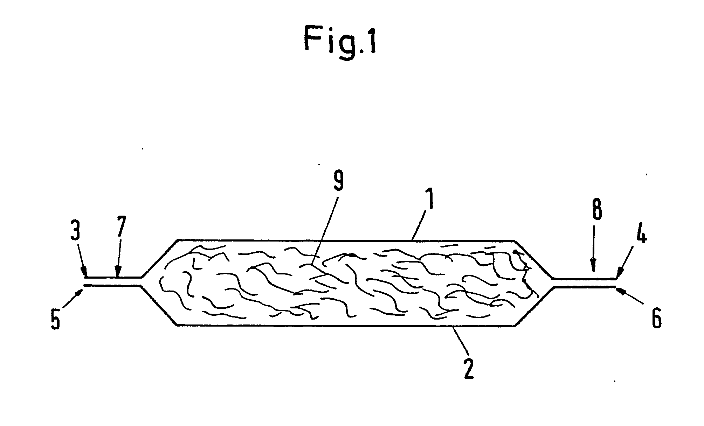

In Fig. 1 sind im Schnitt zwei Papierlagen 1 und 2 dargestellt. Die Papierlage 1 weist die Ränder 3 und 4 und die Papierlage 2 die Ränder 5 und 6 auf. Im Bereich dieser Ränder 3, 4, 5 und 6 sind die beiden Papierlagen 1 und 2 bei 7 und 8 miteinander verbunden. An den Stellen 7 und 8 können die beiden Papierlagen 1 und 2 miteinander verklebt sein. Es kann aber auch an den Stellen 7 und 8 eine Verbindung durch Prägung hergestellt werden.

Wie die Fig. 1 zeigt, ist zwischen den beiden Papierlagen 1 und 2 eine Polster- oder Futtermateriallage 9 aus Holzwolle und/oder Stroh und/oder Heu und/oder Fasern aus leicht verrott- oder vermoderbarer Faserpflanzen angeordnet. Wie schematisch dargestellt, ist dieses Material nicht gepreßt oder dicht gepackt, sondern bildet eine gegen Stöße schützende Polster- oder Futterschicht.

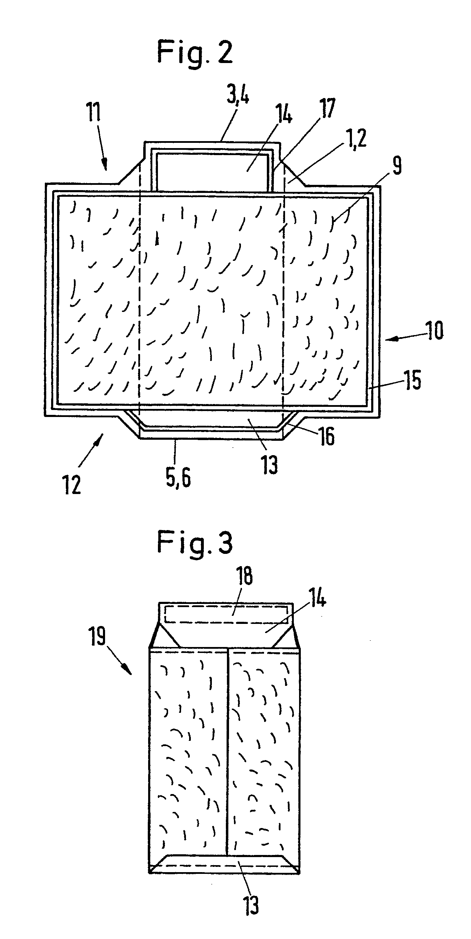

Fig. 2 zeigt eine Draufsicht auf einen aus einem Verbundmaterialabschnitt 10 gebildeten Zuschnitt für eine Polstertasche. Dieser Verbundmaterialabschnitt 10 ist rechteckig und die Polster- oder Futtermateriallage 9 ist innerhalb des Verbundmaterialabschnittes 10 zwischen den Papierlagen 1 und 2 angeordnet und wird von einer Leimnaht 15 begrenzt, die die beiden Papierlagen 1 und 2 miteinander verbindet.

An den einander gegenüberliegenden längeren Seiten 11 und 12 des Rechtecks ist eine Bodenklappe 13 und eine Verschlußklappe 14 ausgebildet. Die schematisch angedeuteten Leimnähte 16 und 17 verbinden lediglich die beiden Papierlagen 1 und 2 miteinander. In den von diesen Leimnähten 16 und 17 umschlossenen Räumen befindet sich kein Polster- oder Futtermaterial.

Aus dem in Fig. 2 dargestellten Zuschnitt kann die in Fig. 3 dargestellte Polstertasche hergestellt werden. In Fig. 2 sind gestrichelt zwei Faltlinien dargestellt, um die Teile des Zuschnittes umgeklappt werden worauf auf diese umgeklappten Teile die Bodenklappe umgelegt und an dieser festgeklebt wird. Wie Fig. 3 zeigt, weist die Verschlußklappe 14 die übliche Leimung 18 auf.

**Patentansprüche**

1. Mehrschichtiges Verbundmaterial, bestehend aus zwei Papierlagen, die zumindest im Bereich zweier zueinander gegenüberliegender Ränder miteinander verbunden sind und zwischen denen eine Polster- oder Futtermateriallage angeordnet ist,

   dadurch gekennzeichnet, daß

   die Polster- oder Futtermateriallage (9) aus Holzwolle und/oder Stroh und/oder Heu und/oder aus Fasern aus leicht verrott- oder vermoderbaren Faserpflanzen gebildet ist.

2. Mehrschichtiges Verbundmaterial nach Anspruch 1,

   dadurch gekennzeichnet, daß
   2.1 die Fasern Bastfasern sind.

3. Mehrschichtiges Verbundmaterial nach Anspruch 1 oder 2,

   dadurch gekennzeichnet, daß
   2.1.1 die Fasern Flachs- und/oder Hanf- und/oder Jutefasern sind.

4. Mehrschichtiges Verbundmaterial nach mindestens einem der Ansprüche 1 bis 3,

   dadurch gekennzeichnet, daß
   2.2 die Fasern Hanffasern sind.

5. Mehrschichtiges Verbundmaterial nach mindestens einem der Ansprüche 1 bis 4,

   dadurch gekennzeichnet, daß
   2.2.1 die Fasern Kokos- und/oder Manilahanf- und/oder Sisalfasern sind.

6. Mehrschichtiges Verbundmaterial nach mindestens einem der Ansprüche 1 bis 5,

   dadurch gekennzeichnet, daß
   2.3 die Polster- oder Futtermateriallage (9) an mindestens einer Papierlage (1, 2) befestigt, insbesondere angeheftet ist.

7. Mehrschichtiges Verbundmaterial nach mindestens einem der Ansprüche 1 bis 6,

   dadurch gekennzeichnet, daß
   2.3.1 die Polster- oder Futtermateriallage (9) an mindestens einer Papierlage (1, 2) mittels Leim angeheftet ist.

8. Mehrschichtiges Verbundmaterial nach mindestens einem der Ansprüche 1 bis 7,

   dadurch gekennzeichnet, daß
   1.1 die Papierlagen (1, 2) durch Prägen oder Verkleben miteinander verbunden sind.

9. Mehrschichtiges Verbundmaterial nach mindestens einem der Ansprüche 1 bis 8,

   dadurch gekennzeichnet, daß
   1.2 das Polster- oder Futtermaterial sterilisiert ist.

10. Zuschnitt für eine Polstertasche aus einem mehrschichtigen Verbundmaterial nach mindestens einem der Ansprüche 1 bis 9,

dadurch gekennzeichnet, daß

an den längeren Seiten (11, 12) eines rechteckigen allseitig geschlossenen Verbundmaterial-Abschnitts (10), einander gegenüberliegend, eine Bodenklappe (13) und eine Verschlußklappe (14) lediglich aus den Papierlagen (1, 2) ausgebildet sind.

11. Verwendung des mehrschichtigen Verbundmaterials nach mindestens einem der Ansprüche 1 bis 9 zur Herstellung von Polstertaschen und/oder gefütterten Kuverts.

# Fig.1

## Fig. 2

## Fig. 3